Europäisches Patentamt

European Patent Office

Office européen des brevets

(19)

(11) Publication number: **0 386 380 B1**

(12) # EUROPEAN PATENT SPECIFICATION

(45) Date of publication of patent specification: **03.08.94**  (51) Int. Cl.5: **C03C 17/34**

(21) Application number: **89400650.1**

(22) Date of filing: **08.03.89**

(54) **Processes for producing colored glass or glass-ceramic articles bearing a non-stick coating, compositions for carrying out said processes, and resultant colored articles.**

(43) Date of publication of application:
**12.09.90 Bulletin 90/37**

(45) Publication of the grant of the patent:
**03.08.94 Bulletin 94/31**

(84) Designated Contracting States:
**DE ES FR GB IT**

(56) References cited:
**EP-A- 0 059 790**     **EP-A- 0 323 882**
**EP-A- 0 386 379**     **BE-A- 431 544**
**FR-A- 1 358 562**     **FR-A- 2 320 914**

**IBM TECHNICAL DISCLOSURE BULLETIN, vol. 20, no. 12, May 1978, page 5233, NewYork, US; B.D. WASHO: "Adhesion of tetrafluorethylene to substrate"**

(73) Proprietor: **CORNING INCORPORATED**
**Sullivan Park FR-212**
**Corning New York 14831(US)**

(72) Inventor: **Carre, Alain Robert Emile**
**313 avenue Anne de Bretagne**
**F-77820 Le Chatelet en Brie(FR)**
Inventor: **Roger, Françoise Marie Michèle**
**49bis rue du souvenir**
**F-77210 Avon(FR)**

(74) Representative: **Colas, Jean-Pierre et al**
**Cabinet de Boisse**
**37, avenue Franklin D. Roosevelt**
**F-75008 Paris (FR)**

## Description

The present invention relates to a process for producing colored articles consisting of a transparent glass or glass-ceramic substrate and of at least one layer of a non-stick polymer, to said articles and to a composition for carrying out said process.

Non-stick cooking utensiles having good release properties toward food are usually coated with fluorocarbon polymers (polytetrafluoroethylene, PTFE, fluorinated ethylene-propylene copolymer, FEP, etc.) or with polysiloxanes (silicones resins).

A gritblasting of the articles to be coated is the usual surface treatment recommended for metallic substrates such as aluminium, cast iron, in order to develop a mechanical anchoring of the non-stick coating into the substrate roughness. For an identical purpose, CORNING GLASS WORKS (CGW) has proposed a more effective surface treatment for polyphased glasses and glass ceramics including a gritblasting and a selective chemical etching (U.S. Patent No. 4.683.168).

Another way, described in our concurrently filed EP-A-0386379 for "Article provided with a non-stick coating with improved adhesion to the substrate and durability, its manufacturing process and composition used", consists in the deposit of a precoating layer composed of a polyimide resin and an amino- or polyamino-alkoxysilane. This precoating is bonded to the glass via a condensation reaction of the hydroxy functions of the hydrolyzed silane and of the glass surface. When a fluorocarbon non-stick coating containing a polyimide binder is applied on this precoating a continuous chemical linkage from the glass surface to the non-stick coating is obtained. The silane modified polyimide precoating was found also very efficient to promote the adhesion of fluorinated coatings containing a polyether sulphone binder and of silicone coatings. In this way, the gritblasting of the substrate is not necessary.

Fluorocarbon (PTFE) coatings are generally porous and are in use prone to staining due to the penetration of fat or food in their porosity. Manufacturers of fluorinated polymer coatings make this staining less visible by supplying dark colored coating compositions (dark grey, black, brown).

Nevertheless, transparent glass articles coated after gritblasting with a PTFE non-stick coating are subject to a supplementary staining phenomenon resulting from the diffusion of detergents, fat and the like through the non-stick coating to the glass surface. These aspect damages are visible, for example, from the external side of a PTFE coated PYREX® cookware after a few uses.

Besides, due to the glass transparency, coating of PYREX® cookware with the non-stick compositions presently supplied by manufacturers (DU PONT DE NEMOURS AND C°, WHITFORD CORPORATION, etc) leads to articles exhibiting externally the color of the non-stick coating, that is, as mentioned above, usually dark and non-attractive.

A solution for these problems can be a strong coloration of the glass substrate.

Colored glass can be obtained for instance by adding oxydes of transition metals (V, Cr, Mn, Fe, Co, Ni, Cu) to the glass composition or by introducing reducible ions of noble metals (Cu, Au, Ag, Pt) (see for example J. ZARZYCKI, "Les verres et l'état vitreux", Masson, Paris, 1982). In this case, the bulk of the glass is entirely colored. These processes are not very versatile given that a particular color of the glass requires a particular glass composition.

The present invention has for object to solve said problems by another approach comprising the application on the colorless glass or glass-ceramic of a first polymer layer (precoating) having good barrier properties towards detergents and fat and having a suitable coloration to give to the finished article, with its non-stick coating, commercially attractive and durable aspect. This colored precoating also displays a good adhesion ability toward the glass substrate and the non-stick coating.

The application of multi-colored precoating being possible, elaborated decorating effects can also be obtained.

More precisely, the present invention relates to a process for producing colored article consisting of a transparent glass or glass-ceramic substrate and of at least one layer of a non-stick polymer covering at least partially said substrate, characterized by (A) gritblasting the portion of the substrate surface to be coated ; (B) applying on that portion a layer of a pigmented polyimide resin ; (C) drying and heating said pigmented polyimide resin at a temperature sufficiently high to convert said pigmented resin into a pigmented solid film ; and then (D) applying said non-stick layer.

The present invention relates also to a composition for carrying out the process defined in claim 1, which comprises (1) a polyimide resin, and (2) a pigment.

According to a preferred embodiment of the process of the invention, the pigmented polyimide resin applied in step (B) contains further an organosilane having two types of functional groups, one of them reacting, after hydrolysis, with -OH groups of the substrate surface, the other being reactive with the polyimide resin.

The invention relates also to a composition useful for carrying out said preferred process, characterized in that it consists of (1) a polyimide resin ; (2) a pigment; and (3) an organosilane with two types of functionnal groups, one of them being reactive, after hydrolysis, with -OH groups of the substrate surface and the other being reactive with said polyimide.

The present invention relates finally to an article consisting of a transparent glass or glass-ceramic substrate, and of at least one layer of a non-stick polymer covering at least partially said substrate, characterized by the fact that it contains also, applied between said substrate and said non-stick polymer, a pigmented polyimide layer, said layer being applied on a gritblasted surface of said substrate ; as well as to such an article wherein said pigmented polyimide layer further comprises an organosilane chemically bound to -OH groups of the substrate surface and to said polyimide layer.

The present invention permits to produce glass cookware articles coated with a non-stick coating and exhibiting externally clear, vivid, brilliant, attractive colors and durable decorations non-sensitive to staining.

It consists in the application of a colored precoating on a transparent glass or glass ceramic cookware before the application of the non-stick coating. The role of this precoating is multiple, preventing the diffusion of detergents and fat toward the inside cookware surface, ensuring the adhesion of the non-stick coating, and determining colors or the decoration of the finished non-stick article.

The polyimide resin used in the present invention can be any polyimide resin.

Preferred classes of polyimide resin are, however, the polyamide-imides 1 (PAI-1) and 2 (PAI-2) defined in the Recommendation LI of the Bundesgesundheitsamt (issued as communication 160 in the Bundesgesundheitsblatt, Vol. 26, n° 7, Juillet 1983, pages 219-221) which teaches appropriate polymeric coating systems for frying, boiling and baking utensils. PAI-1 is poly-N-(4,4'-diphenylmethane-trimellitamide-imide) prepared by reaction of 4,4'-diisocyanatodiphenylmethane with trimellitic anhydride.PAI-2 is poly-N-(4,4'-diphenylmethane-trimellitamide-imide) prepared by reaction of 4,4'-diaminodiphenylmethane with benzoyl chloride-3,4-dicarboxylic acid anhydride.

These polyamide-imides are prefered because of their food-contact approval by the administrations of most countries.

It should be noted that these polyamide-imides 1 and 2 are described in tee above-referred Recommmendation as bonding resins to be used in admixture with homopolymers or copolymers of tetrafluoroethylene. Said recommendation does not suggest that these polyamide-imides can be used for forming a colored pre-coating to be overcoated with a non-stick coating.

Polyamide-imide resins (PAI-1, PAI-2) are currently supplied by WHITFORD CORPORATION (Box 507, West Chester, Pa 19381, USA), WHITFORD PLASTICS Ltd (Brindley 86, Astmoor, Runcorn, Cheshire, WA7 1PF, GB), AMOCO CHEMICALS CORPORATION (200 East Rodolphe Drive, Chicago, Illinois, 60 601, USA), among others.

An example of unpigmented polyamide-imide resin is supplied by WHITFORD PLASTICS Ltd under the reference XYLAN® 8470-0170-3320 Clear Resin (PAI-1).

The coloration of a clear PAI resin is achieved by adding pigments giving the desired color. As examples of clear colored pigments, one can use the IRIODIN® pearl lustre pigments (E. MERCK, Postfach 4119, D-6100 Darmstadt 1, WG), the ET 1024 aluminium pigment (SILBERLINE Ltd, Banbeath Industrial Estate, Leven, Fife, Scotland, KY8 5 HD, GB), etc... A darkening of the color is also possible, for example, with SPEZIALSCHWARZ carbon black pigments (DEGUSSA AG, GB AC, D-6000, Frankfurt 1, WG). All the pigments cited are physiologically safe and thermally stable.

Examples of typical colors of non-stick PYREX® articles prepared from several pigmented precoating compositions are given in the table A.

TABLE A

| Type of pigment | External color of non-stick PYREX® article |
|---|---|
| IRIODIN® 504 | Brilliant red |
| IRIODIN® 530 | Brilliant bronze |
| IRIODIN® 502 | Brilliant red-brown |
| IRIODIN® 235 | Clear green (interference color) |
| IRIODIN® 225 | Blue (Interference color) |
| ET 1024 aluminium | Sparkle grey |
| IRIODIN® 153 + FW6 carbon black | Sparkle dark grey |

The amount of pigments added to the clear PAI resin is a function of the desired coloring effect, of the type of pigment, of the particle size, etc... Typical formulations will be proposed in the examples of the present invention.

By using masks and silkscreen printing, decorating patterns of several colors (stars, flowers,....) can be designed from differently pigmented procoating compositions.

Dried thicknesses of the colored precoating between 10 to 20 $\mu$m are usually satisfactory to obtain the desired coloring effect and good barrier properties towards detergents and fat ; but, of course, thicker precoatings would be also useful.

Gritblasting of the glass cookware provides a suitable mechanical anchoring of the colored precoating onto the inside cookware surface. Roughness profile with an arithmetic mean (Ra) value of a few $\mu$m, for example of the order of 5 $\mu$m has been found satisfactory.

Nevertheless, the preferred process consists in adding to the precoating compositions a small amount of an amino- or polyamino-alkoxysilane (1 to 10% by weight of the colored polyimide resin composition), for achieving a chemical bonding at the precoating/glass interface.

Among the amino- or polyamino-alkoxysilanes which are well-known compounds, gamma-aminopropyltriethoxysilane (A-1100, UNION CARBIDE ; 73000 SILBIONE, RHONE-POULENC, etc.) is preferred, due to its relatively low price and its approval for food contact. In addition, silane release measurements, in food simulants (water, oil, alcohol, acetic acid), from coated articles have been found below 1 mg per liter (< 1 ppm).

The used non-stick layer or layers can be of any type. The most currently used are produced from compositions based on polymers or copolymers of tetrafluoroethylene or on silicones. Such compositions are commercially available from various sources and their mode of application is well-known. It appears, thus unnecessary to disclose them further.

The invention will be further illustrated by the following non-limiting examples. In these examples, the performance and durability of glass coated with non-stick coatings, with or without a precoating according to the present invention, were evaluated by using adhesion tests, thermal aging test, and experiments of permeability to detergents and fat.

Adhesion tests:

Adhesion is evaluated with the cross-hatch and the thumb nail tests after submerging the non-stick articles in boiling water for 15 minutes. After the boiling water treatment, the samples are dried and cooled to room temperature.

Cross-hatch test (CHT):

The materials used are a scalpel or a razor blade, 3M's Scotch Brand 898 adhesive tape and a template having eleven parallel grooves (distance between two grooves: 2 mm). Using the template, eleven cuts are scribed through the coating, and eventually through the precoating, to the glass substrate. This procedure is repeated at right angle to produce a grid of 100 squares.

Over the scribed area, a strip of adhesive tape is pressed, the tape running parallel to one set of scribed lines. The tape is firmly rubbed with the fingernail to obtain maximum contact. Then, the tape is firmly and rapidly pulled off at a 90° angle. This last step is repeated with a fresh piece of tape after having rotated the area of 90°.

Adhesion is good if no scribed square is peeled off.

Thumb nail test (TNT):

This scratch test involves the use of the thumbnail to chip or peel away the coating, and eventually the precoating, from the edge of a deliberate scalpel scratch in the non-stick coating (and in the precoating). The scalpel scratch is made down to the bare glass. After the coating (and the precoating) is (are) firmly pulled away from the scratch at a 90° angle, the length of the nail track is measured.

Adhesion is considered as good if the length of the track is smaller than 6 millimetres.

Thermal aging:

The thermal aging is evaluated by heating the coated samples, with or without precoating in a stove at 250°C for 6 days and submitting them to the adhesion tests.

Detergent permeability

The samples are submerged in a 3 percent sodium carbonate solution (80 g of $Na_2CO_3$, 10 $H_2O$ for one liter of deionized water) at 95°C for one hour. After rinsing with cold water and drying, the coating inside of the samples and the coating or precoating/glass interface are observed. Presence of blisters, pops, delamination, permeation, staining and the like is noticed.

Fat permeability

The samples are filled with a thick layer of sunflower oil and placed in a stove at 200°C for one hour. After this cooking, the samples are cooled, cleaned out and the coating or precoating/glass interface is examined. One notices the possible presence of staining or greasy spots due to the diffusion of fat down to the glass surface.

EXAMPLES

The efficiency of the proposed invention in comparison with the processes of the prior art is proved by the following examples.

Exemple 1:

In this example, we compare the performance and the aspect of PYREX® articles coated with two layers of PTFE compositions supplied by E.I. DU PONT DE NEMOURS AND C° after the usual gritblasting, and the performance and the aspect of PYREX® articles precoated according to the invention, then coated with the PTFE layers.

The precoating composition was prepared by adding 6 parts by weight of IRIODIN® 504 to 100 parts of XYLAN® 8470-0170-3320 clear polyamide-imide resin (PAI-1 from WHITFORD). Viscosity adjustment was made by adding ethanol and water.

For mechanical adhesion of the precoating, the PYREX® article is gritblasted to an arithmetic mean roughness (Ra) of about 5 $\mu$m. For chemical adhesion of the precoating,1.25 part of gamma-aminopropyltriethoxysilane was added to 100 parts of the colored precoating. This precoating was directly applied after ethanol cleaning of the ware.

The different layers were applied by gun spraying in order to have a total dried PTFE film thickness of about 20 $\mu$m and a precoating thickness of about 10 $\mu$m. Precoating, drying and PTFE curing schedules are given in Table 1.

The results of the adhesion evaluation by means of the cross-hatch test (CHT) and the thumb nail test (TNT) performed before and after thermal aging and the results of the experiments of permeability toward detergents and fat are summarized also in Table 1.

From these results it can be concluded that the PTFE coatings are very permeable to detergents and fat. On the contrary, the colored polyamide-imide precoating has very good barrier properties and good adhesion ability toward glass and PTFE coating. PYREX® were treatments of type C and D show that the colored precoating/glass adhesion can be either mechanical or chemical in nature.

It appears also clearly that non-stick PYREX® ware precoated according to the invention exhibit a brilliant and attractive red color quite different from the dark color of the PTFE non-stick coatings supplied by E.I. DU PONT DE NEMOURS AND C°. This vivid color is not effected by staining and is not altered by the thermal aging.

TABLE I

| PYREX® WARE TREATMENT | PTFE coating, Du Pont Reference | PTFE curing time (mn), température (°C) | ADHESION BEFORE THERMAL AGING | | ADHESION AFTER THERMAL AGING | | PERMEABILITY Detergents | PERMEABILITY Fat | EXTERNAL COLOR |
|---|---|---|---|---|---|---|---|---|---|
| | | | CHT | TNT | CHT | TNT | | | |
| (A) Gritblasting (Ra=11µm) | 1st layer 459 – 523 2nd layer 456 – 396 | 10 min, 410°C | Good | Good | Good | Good | Complete permeation | Complete permeation | Charcoal grey |
| (B) Gritblasting (Ra=5 µm) | 1st layer 459Z67303 2nd layer 456Z67302 | 10 min, 400°C | Good | Good | Good | Good | - Complete permeation - Blisters | Complete permeation | Dark grey |
| (C) - Gritblasting (Ra=5µm) - Colored precoating Drying:10 min, 150°C 10 min, 200°C | 1st layer 459Z67303 2nd layer 456Z67302 | 15 min, 380°C | Good | Good | Good | Good | no defect | no defect | Brilliant red |
| (D) - Silylated colored precoating Drying:10 min, 100°C | 1st layer 459Z67303 2nd layer 456Z67302 | 10 min, 400°C | Good | Good | Good | Good | no defect | no defect | Brilliant red |

(C) and (D) are prepared according to the invention.

Example II:

As in example I, we compare the performance and the aspect of PYREX® samples coated with two layers of PTFE compositions supplied by E.I. DU PONT DE NEMOURS AND C° under the reference 459 Z 67303 and 456 Z 67302 after the usual gritblasting, and the performance and the aspect of PYREX®

6

articles precoated according to the invention, then coated with the PTFE layers.

The precoating composition was obtained by mixing 6 parts by weight of IRIODIN® 225 with 100 parts of XYLAN® 8470-0170-3320 clear polyamide-imide resin (PAI-1 from WHITFORD).

An arithmetic mean roughness (Ra) of 5 $\mu$m was created by gritblasting to promote the glass/precoating mechanical adhesion. An alternative chemical adhesion has been obtained by adding 1.5 part of gamma-aminopropyltriethoxysilane to 100 parts of the colored precoating composition.

The total thickness of the PTFE layers was of 20 $\mu$m and, for the PYREX® items coated according to the invention, the precoating thickness was of 10 $\mu$m.

Three different samples were considered corresponding to the B, C and D samples of Table 1 for the drying conditions of the precoating and for the PTFE curing.

All the results concerning the adhesion evaluted with the cross-hatch test and the permeability are collected in Table 2. The external aspect of non-stick PYREX® articles is also compared.

As mentioned in example I, it can be concluded that precoated items have good adhesion properties and a good impermeability toward detergent and fat.

Blue to blue-green nuances of the precoating can be obtained by adjusting the precoating thickness (interference color).

TABLE 2

| PYREX® ware treatment | ADHESION | | PERMEABILITY | | EXTERNAL COLOR |
|---|---|---|---|---|---|
| | BEFORE THERMAL | AFTER AGING | Detergents | Fat | |
| - Gritblasting (Ra = 5$\mu$m) | good | good | complete permeation blisters | complete permeation | Dark grey |
| - Gritblasting (Ra = 5$\mu$m) - Colored precoating (according to the invention) | good | good | no defect | no defect | Blue |
| - Silylated colored precoating (according to the invention) | good | good | no defect | no defect | Blue |

Example III :

A non-stick PYREX® dish having externally a brilliant red aspect was obtained by adding 4 parts by weight of IRIODIN® 504 to 100 parts of XYLAN® 8470-0170-3320 clear resin. The mixing of 4.3 parts of gamma-aminopropyltriethoxysilane with 100 parts of the colored composition provided the adhesion of this precoating to the glass.

After application of this composition and drying for 10 minutes at 100°C (dried thickness: 15 $\mu$m), the two coat non-stick coating, code 459 Z 67303 and 456 Z 67302, from E.I. DU PONT DE NEMOURS AND C°, was sprayed on the precoated substrate. The thickness of these two layers was respectively 12 and 8 $\mu$m. The curing of the coating was achieved after 10 minutes at 400°C.

Adhesion at interfaces evaluated by using CHT and TNT was found very good and durable after thermal aging.

The brilliant red color was stable after thermal aging and was not sensitive to detergent or greasy staining.

Example IV :

A non-stick PYREX® bakeware, externally brilliant red was prepared as described in example III, by adding 8 parts of IRIODIN® 504 to 100 parts of XYLAN® 8470-0170-3320 clear resin.

### Example V :

With the same procedure as that of Example III, a brilliant bronze colored non-stick PYREX® bakeware was obtained by adding 8 parts of IRIODIN® 530 to 100 parts of XYLAN® 8470 clear resin.

### Example VI :

An externally brilliant red-brown non-stick PYREX® bakeware was prepared as described in example III, by adding 8 parts in weight of IRIODIN® 502 to 100 parts of XYLAN® 8470 polyamide-imide clear resin.

### Example VII :

Similarly to example V and VI, externally brilliant bronze or red-brown non-stick PYREX® articles were prepared by adding respectively 6 parts by weight of IRIODIN® 530 or IRIODIN® 502 to 100 parts of XYLAN® 8470 polyamide-imide clear resin.

### Example VIII :

An externally clear green, non-stick PYREX® bakeware was prepared as described in example III, by adding 6 parts by weight of IRIODIN® 235 to 100 parts of XYLAN® 8470 polyamide-imide clear resin (interference color).

### Example IX :

A non-stick PYREX® bakeware colored in sparkle dark grey was prepared by adding carbon black and silver white IRIODIN® 153 to a polyamide-imide resin of type 2 (PAI-2) from WHITFORD PLASTICS Ltd, modified with gamma-aminopropyltriethoxysilane (4.3 parts for 100 parts of colored resin).
The non-stick coating was applied as described in example III.

### Example X :

A non-stick VISION® frypan having a sparkle metallized grey external aspect was prepared by adding 10 parts by weight of ET 1024 SILBERLINE® aluminium pigment to 100 parts of the clear polyamide-imide resin (PAI-I) from WHITFORD PLASTICS Ltd.
In this mixture was also added 4,3 parts by weight of gamma-aminopropyltriethoxysilane per 100 parts of colored resin. After spraying and drying of this precoating, the fluorinated non-stick coating was applied as in example III.

### Example XI :

By using masks and silkscreen printing, decorating patterns of several colors (stars, flowers, ...) were obtained with a silane-modified polyamide-imide layer differently pigmented. The non-stick coating was then applied on the multicolored precoating as described in example III.

### Example XII :

A bakeware was coated with a silicone resin obtained by mixing 10 parts by weight of 6-2230 resin in 100 parts of Q1-2531 resin (resins supplied by Dow Corning C°). Aluminium pigment (sparkle silver 5000 AR, SILBERLINE) and carbon black were added to color in grey the non-stick coating.
This coating was applied on a brilliant red precoated bakeware, the precoating being composed of XYLAN® 8470 clear resin (PAI-1) containing 7.1% by weight of IRIODIN® 534 and 3.8% by weight of gamma-aminopropyltriethoxysilane.
Drying of the precoating and curing of the non-stick coating were achieved at 150°C and 250°C, respectively.
The aspect of the finished non-stick bakeware was thus grey inside and brilliant red outside. Precoating and non-stick coating adhesion was found very good and durable after the thermal aging. The aspect of this item was stable, durable and not sensitive to the action of detergents and fat.

The above examples clearly demonstrate that the present invention provides means to produce non-stick glass and glass ceramic ware having clear, vivid, brilliant, attractive colors and stable and durable decorating patterns. For transparent substrates, an infinite number of color nuances and of decorating possibilities can be created. The decorating effects and colors are not sensitive to detergents and fat staining given the perfect imperviousness of the pigmented polyimide precoating. Besides, the precoating compositions have a good adhesion ability toward the glass and glass ceramic substrates and toward non-stick coatings. Thus, the precoating properties insure a good durability of the aspect and of the performances of the non-stick glass ware made according to the present invention. Moreover, the compositions and the processes disclosed are particularly suitable for application to an industrial scale.

Obviously, the procedures described above are only examples, and they could be modified, in particular by substitution of technical equivalents without departing from the scope of the present invention.

**Claims**

**Claims for the following Contracting States : ES, FR, IT**

1. Process for producing colored article consisting of a transparent glass or glass-ceramic substrate and of at least one layer of a non-stick polymer covering at least partially said substrate, characterized by (A) gritblasting the portion of the substrate surface to be coated ; (B) applying on that portion a layer of a pigmented polyimide resin ; (C) drying and heating said pigmented polyimide resin at a temperature sufficiently high to convert said pigmented resin into a pigmented solid film ; and then (D) applying said non-stick layer.

2. Process according to claim 1, characterized in that the pigmented polyimide resin applied in step (B) contains further an organosilane having two types of functional groups, one of them reacting, after hydrolysis, with -OH groups of the substrate surface, the other being reactive with the polyimide resin.

3. Process according to claim 1 or 2, characterized by the fact that the polyimide resin is poly-N-(4,4'-diphenylmethane-trimellitamide-imide) prepared by reaction of 4,4'-diisocyanatodiphenylmethane with trimellitic anhydride.

4. Process according to claim 1 or 2, characterized by the fact that the polyimide resin is poly-N-(4,4'-diphenylmethane-trimellitamide-imide) prepared by reaction of 4,4'-diaminodiphenylmethane with benzoyl chloride-3,4-dicarboxylic acid anhydride.

5. Process according to claim 2, characterized by the fact that the organosilane is an amino or polyaminoalkoxysilane.

6. Process according to claim 5, characterized by the fact that the amino-alkoxysilane is gamma-aminopropyltriethoxysilane.

7. Process according to claim 6, characterized by the fact that the proportion of organosilane is between 1 to 10 percent by weight of the mixture applied in step (B).

8. Process according to claim 7, characterized by the fact that the proportion of organosilane is between 1 to 5 percent by weight of the mixture applied in step (B).

9. Process according to any one of claims 1 to 8, characterized by the fact that said non-stick coating is comprised of either a fluorocarbon or a silicone polymer.

10. Article consisting of a transparent glass or glass-ceramic substrate, and of at least one layer of a non-stick polymer covering at least partially said substrate, characterized by the fact that it contains also, applied between said substrate and said non-stick polymer, a pigmented polyimide layer, said layer being applied on a gritblasted surface of said substrate.

11. Article according to claim 10, characterized in that said pigmented polyimide layer further comprises an organosilane chemically bound to -OH groups of the substrate surface and to said polyimide layer.

**12.** Article according to claim 10 or 11, characterized in that said polyimide derives from poly-N-(4,4'-diphenylmethane-trimellitamide-imide) prepared by reaction of 4,4'-diisocyanatodiphenylmethane with trimellitic anhydride.

**13.** Article according to claim 10 or 11, characterized in that said polyimide derives from poly-N-(4,4'-diphenylmethane-trimellitamide-imide) prepared by reaction of 4,4'-diaminodiphenylmethane with benzoyl chloride-3,4-dicarboxylic acid anhydride.

**14.** Article according to any one of claims 10 to 13, characterized in that said non-stick polymer is a fluorocarbon or a silicone polymer.

**15.** Article according to any one of claims 10 to 14, characterized in that it is cookware.

**16.** Composition for carrying out the process defined in claim 1, which comprises (1) a polyimide resin, and (2) a pigment.

**17.** Composition for carrying out the process defined in claim 2, which comprises (1) a polyimide resin ; (2) a pigment and (3) an organosilane with two types of functional groups, one of them being reactive, after hydrolysis, with -OH groups of the substrate surface and the other being reactive with said polyimide.

**18.** Composition according to claims 16 or 17, characterized in that said polyimide resin is poly-N-(4,4'-diphenylmethane-trimellitamide-imide) prepared by reaction of 4,4'-diisocyanatodiphenylmethane with trimellitic anhydride.

**19.** Composition according to claims 16 or 17, characterized in that said polyimide resin is poly-N-(4,4'-diphenylmethane-trimellitamide-imide) prepared by reaction of 4,4'-diaminodiphenylmethane with benzoyl chloride-3,4-dicarboxylic acid anhydride.

**20.** Composition according to claim 7, characterized in that said organosilane is an amino- or polyaminoalkoxysilane.

**21.** Composition according to claim 20, characterized in that said amino-alkoxysilane is gamma-aminopropyltriethoxysilane.

**22.** Composition according to claim 21, characterized in that the organosilane proportion in the pigmented polyimide resin is between 1 to 10% by weight.

**Claims for the following Contracting States : DE, GB**

**1.** Process for producing colored article consisting of a transparent glass or glass-ceramic substrate and of at least one layer of a non-stick polymer covering at least partially said substrate, characterized by (A) gritblasting the portion of the substrate surface to be coated ; (B) applying on that portion a layer of a pigmented polyimide resin ; (C) drying and heating said pigmented polyimide resin at a temperature sufficiently high to convert said pigmented resin into a pigmented solid film ; and then (D) applying said non-stick layer.

**2.** Process according to claim 1, characterized in that the pigmented polyimide resin applied in step (B) contains further an organosilane having two types of functional groups, one of them reacting, after hydrolysis, with -OH groups of the substrate surface, the other being reactive with the polyimide resin.

**3.** Process according to claim 1 or 2, characterized by the fact that the polyimide resin is poly-N-(4,4'-diphenylmethane-trimellitamide-imide) prepared by reaction of 4,4'-diisocyanatodiphenylmethane with trimellitic anhydride.

**4.** Process according to claim 1 or 2, characterized by the fact that the polyimide resin is poly-N-(4,4'-diphenylmethane-trimellitamide-imide) prepared by reaction of 4,4'-diaminodiphenylmethane with benzoyl chloride-3,4-dicarboxylic acid anhydride.

5. Process according to claim 2, characterized by the fact that the organosilane is an amino or polyaminoalkoxysilane.

6. Process according to claim 5, characterized by the fact that the amino-alkoxysilane is gamma-aminopropyltriethoxysilane.

7. Process according to claim 6, characterized by the fact that the proportion of organosilane is between 1 to 10 percent by weight of the mixture applied in step (B).

8. Process according to claim 7, characterized by the fact that the proportion of organosilane is between 1 to 5 percent by weight of the mixture applied in step (B).

9. Process according to any one of claims 1 to 8, characterized by the fact that said non-stick coating is comprised of either a fluorocarbon or a silicone polymer.

10. Article consisting of a transparent glass or glass-ceramic substrate, and of at least one layer of a non-stick polymer covering at least partially said substrate, characterized by the fact that it contains also, applied between said substrate and said non-stick polymer, a pigmented polyimide layer, said layer being applied on a gritblasted surface of said substrate.

11. Article according to claim 10, characterized in that said pigmented polyimide layer further comprises an organosilane chemically bound to -OH groups of the substrate surface and to said polyimide layer.

12. Article according to claim 10 or 11, characterized in that said polyimide derives from poly-N-(4,4'-diphenylmethane-trimellitamide-imide) prepared by reaction of 4,4'-diisocyanatodiphenylmethane with trimellitic anhydride.

13. Article according to claim 10 or 11, characterized in that said polyimide derives from poly-N-(4,4'-diphenylmethane-trimellitamide-imide) prepared by reaction of 4,4'-diaminodiphenylmethane with benzoyl chloride-3,4-dicarboxylic acid anhydride.

14. Article according to any one of claims 10 to 13, characterized in that said non-stick polymer is a fluorocarbon or a silicone polymer.

15. Article according to any one of claims 10 to 14, characterized in that it is cookware.

16. Composition for carrying out the process defined in claim 1, which comprises (1) a polyimide resin, and (2) a pigment, no organosilane being present in said composition.

17. Composition according to claim 16, characterized in that said polyimide resin is poly-N-(4,4'-diphenylmethane-trimellitamide-imide) prepared by reaction of 4,4'-diisocyanatodiphenylmethane with trimellitic anhydride.

18. Composition according to claims 16 or 17, characterized in that said polyimide resin is poly-N-(4,4'-diphenylmethane-trimellitamide-imide) prepared by reaction of 4,4'-diaminodiphenylmethane with benzoyl chloride-3,4-dicarboxylic acid anhydride.

**Patentansprüche**
**Patentansprüche für folgende Vertragsstaaten : ES, FR, IT**

1. Verfahren zur Herstellung eines gefärbten Gegenstandes, bestehend aus einem transparenten Glas- oder Glas-Keramik-Substrat und aus wenigstens einer Schicht eines nichtklebrigen Polymers, die wenigstens teilweise dieses Substrat bedeckt, gekennzeichnet durch (A) Sandstrahlblasen des Anteils der zu beschichtenden Substrat-Oberfläche, (B) Aufbringen einer Schicht eines pigmentierten Polyimid-Harzes auf diesen Anteil, (C) Trocknen und Erwärmen des pigmentierten Polyimid-Harzes bei einer ausreichend hohen Temperatur, um das pigmentierte Harz in einen pigmentierten, festen Film zu überführen und dann (D) Aufbringen dieser nicht-klebrigen Schicht.

**2.** Verfahren gemäß Anspruch 1, dadurch gekennzeichnet, daß das in Stufe (B) angewendete, pigmentierte Polyimid-Harz weiterhin ein Organosilan enthält, das zwei Arten funktioneller Gruppen hat, von denen eine nach Hydrolyse mit -OH-Gruppen der Substrat-Oberfläche reagiert, die andere mit dem Polyimid-Harz reaktiv ist.

**3.** Verfahren gemäß Anspruch 1 oder 2, dadurch gekennzeichnet, daß das Polyimid-Harz Poly-N-(4,4'-diphenylmethan-trimellithamid-imid) ist, das durch Reaktion von 4,4'-Diisocyanatdiphenylmethan mit Trimellithsäureanhydrid hergestellt wird.

**4.** Verfahren gemäß Anspruch 1 oder 2, dadurch gekennzeichnet, daß das Polyimid-Harz Poly-N-(4,4'-diphenylmethan-tri-mellithamid-imid) ist, das durch Reaktion von 4,4'-Diaminodiphenylmethan mit Benzoylchlorid-3,4-dicarbonsäureanhydrid hergestellt wird.

**5.** Verfahren gemäß Anspruch 2, dadurch gekennzeichnet, daß das Organosilan ein Amino- oder Polyaminoalkoxysilan ist.

**6.** Verfahren gemäß Anspruch 5, dadurch gekennzeichnet, daß das Aminoalkoxysilan $\gamma$-Aminopropyltriethoxysilan ist.

**7.** Verfahren gemäß Anspruch 6, dadurch gekennzeichnet, daß der Anteil des Organosilans 1 bis 10 Gew.-% der in Stufe (B) angewendeten Mischung beträgt.

**8.** Verfahren gemäß Anspruch 7, dadurch gekennzeichnet, daß der Anteil des Organosilans 1 bis 5 Gew.-% der in Stufe (B) angewendeten Mischung beträgt.

**9.** Verfahren gemäß irgendeinem der Ansprüche 1 bis 8, dadurch gekennzeichnet, daß die nicht-klebrige Beschichtung entweder ein Fluorkohlenstoff- oder ein Silicon-Polymer ist.

**10.** Gegenstand, bestehend aus einem transparenten Glas- oder Glas-Keramik-Substrat und aus wenigstens einer Schicht eines nicht-klebrigen Polymers, die wenigstens teilweise dieses Substrat bedeckt, dadurch gekennzeichnet, daß er auch zwischen dem Substrat und dem nicht-klebrigen Polymer aufgebracht, eine pigmentierte Polyimid-Schicht enthält, wobei die Schicht auf eine sandstrahlgeblasene Oberfläche des Substrats aufgebracht wird.

**11.** Gegenstand gemäß Anspruch 10, dadurch gekennzeichnet, daß die pigmentierte Polyimid-Schicht weiterhin ein Organosilan chemisch an -OH-Gruppen der Substrat-Oberfläche und an die Polyimid-Schicht gebunden umfaßt.

**12.** Gegenstand gemäß Anspruch 10 oder 11, dadurch gekennzeichnet, daß das Polyimid von Poly-N-(4,4'-diphenylmethan-trimellithamid-imid) stammt, das durch Reaktion von 4,4'-Diisocyanatdiphenylmethan mit Trimellithsäureanhydrid hergestellt wird.

**13.** Gegenstand gemäß Anspruch 10 oder 11, dadurch gekennzeichnet, daß das Polyimid von Poly-N-(4,4'-diphenylmethan-trimellithamid-imid) stammt, das durch Reaktion von 4,4'-Diaminodiphenylmethan mit Benzoylchlorid-3,4-dicarbonsäureanhydrid hergestellt wird.

**14.** Gegenstand gemäß irgendeinem der Ansprüche 10 bis 13, dadurch gekennzeichnet, daß das nicht-klebrige Polymer ein Fluorkohlenstoff- oder ein Silicon-Polymer ist.

**15.** Gegenstand gemäß irgendeinem der Ansprüche 10 bis 14, dadurch gekennzeichnet, daß er Küchengeschirr ist.

**16.** Zusammensetzung zur Duchführung des in Anspruch 1 definierten Verfahrens, welche (1) eine Polyimid-Harz und (2) ein Pigment umfaßt.

**17.** Zusammensetzung zur Duchführung des in Anspruch 2 definierten Verfahrens, welche (1) eine Polyimid-Harz, (2) ein Pigment und (3) ein Organosilan umfaßt, das zwei Arten funktioneller Gruppen hat, von denen eine nach Hydrolyse mit -OH-Gruppen der Substrat-Oberfläche reaktiv ist, die andere mit dem Polyimid-Harz reaktiv ist.

**18.** Zusammensetzung gemäß Anspruch 16 oder 17, dadurch gekennzeichnet, daß das Polyimid-Harz Poly-N-(4,4'-diphenylmethan-trimellithamid-imid) ist, das durch Reaktion von 4,4'-Diisocyanatdiphenylmethan mit Trimellithsäureanhydrid hergestellt wird.

**19.** Zusammensetzung gemäß Anspruch 16 oder 17, dadurch gekennzeichnet, daß das Polyimid-Harz Poly-N-(4,4'-diphenylmethan-trimellithamid-imid) ist, das durch Reaktion von 4,4'-Diaminodiphenylmethan mit Benzoylchlorid-3,4-dicarbonsäureanhydrid hergestellt wird.

**20.** Zusammensetzung gemäß Anspruch 7, dadurch gekennzeichnet, daß das Organosilan ein Amino- oder Polyaminoalkoxysilan ist.

**21.** Zusammensetzung gemäß Anspruch 20, dadurch gekennzeichnet, daß das Aminoalkoxysilan $\gamma$-Aminopropyltriethoxysilan ist.

**22.** Zusammensetzung gemäß Anspruch 21, dadurch gekennzeichnet, daß der Organosilan-Anteil in dem pigmentierten Polyimid-Harz 1 bis 10 Gew.-% beträgt.

**Patentansprüche für folgende Vertragsstaaten : DE, GB**

**1.** Verfahren zur Herstellung eines gefärbten Gegenstandes, bestehend aus einem transparenten Glas- oder Glas-Keramik-Substrat und aus wenigstens einer Schicht eines nicht-haftfähigen Polymers, die wenigstens teilweise dieses Substrat bedeckt, gekennzeichnet durch (A) Sandstrahlblasen des Anteils der zu beschichtenden Substrat-Oberfläche, (B) Aufbringen einer Schicht eines pigmentierten Polyimid-Harzes auf diesen Anteil, (C) Trocknen und Erwärmen des pigmentierten Polyimid-Harzes bei einer ausreichend hohen Temperatur, um das pigmentierte Harz in einen pigmentierten, festen Film zu überführen und dann (D) Aufbringen dieser nicht-haftfähigen Schicht.

**2.** Verfahren gemäß Anspruch 1, dadurch gekennzeichnet, daß das in Stufe (B) angewendete, pigmentierte Polyimid-Harz weiterhin ein Organosilan enthält, das zwei Arten funktioneller Gruppen hat, von denen eine nach Hydrolyse mit -OH-Gruppen der Substrat-Oberfläche reagiert, die andere mit dem Polyimid-Harz reaktiv ist.

**3.** Verfahren gemäß Anspruch 1 oder 2, dadurch gekennzeichnet, daß das Polyimid-Harz Poly-N-(4,4'-diphenylmethan-trimellithamid-imid) ist, das durch Reaktion von 4,4'-Diisocyanatdiphenylmethan mit Trimellithsäureanhydrid hergestellt wird.

**4.** Verfahren gemäß Anspruch 1 oder 2, dadurch gekennzeichnet, daß das Polyimid-Harz Poly-N-(4,4'-diphenylmethan-tri-mellithamid-imid) ist, das durch Reaktion von 4,4'-Diaminodiphenylmethan mit Benzoylchlorid-3,4-dicarbonsäureanhydrid hergestellt wird.

**5.** Verfahren gemäß Anspruch 2, dadurch gekennzeichnet, daß das Organosilan ein Amino- oder Polyaminoalkoxysilan ist.

**6.** Verfahren gemäß Anspruch 5, dadurch gekennzeichnet, daß das Aminoalkoxysilan $\gamma$-Aminopropyltriethoxysilan ist.

**7.** Verfahren gemäß Anspruch 6, dadurch gekennzeichnet, daß der Anteil des Organosilans 1 bis 10 Gew.-% der in Stufe (B) angewendeten Mischung beträgt.

**8.** Verfahren gemäß Anspruch 7, dadurch gekennzeichnet, daß der Anteil des Organosilans 1 bis 5 Gew.-% der in Stufe (B) angewendeten Mischung beträgt.

**9.** Verfahren gemäß irgendeinem der Ansprüche 1 bis 8, dadurch gekennzeichnet, daß die nicht-haftfähige Beschichtung entweder ein Fluorkohlenstoff- oder ein Silicon-Polymer ist.

EP 0 386 380 B1

**10.** Gegenstand, bestehend aus einem transparenten Glas- oder Glas-Keramik-Substrat und aus wenigstens einer Schicht eines nicht-haftfähigen Polymers, die wenigstens teilweise dieses Substrat bedeckt, dadurch gekennzeichnet, daß er auch eine zwischen dem Substrat und dem nicht-haftfähigen Polymer aufgebrachte pigmentierte Polyimid-Schicht enthält, wobei die Schicht auf eine sandstrahlgeblasene Oberfläche des Substrats aufgebracht ist.

**11.** Gegenstand gemäß Anspruch 10, dadurch gekennzeichnet, daß die pigmentierte Polyimid-Schicht weiterhin ein Organosilan chemisch an -OH-Gruppen der Substrat-Oberfläche und an die Polyimid-Schicht gebunden umfaßt.

**12.** Gegenstand gemäß Anspruch 10 oder 11, dadurch gekennzeichnet, daß das Polyimid von Poly-N-(4,4'-diphenylmethan-trimellithamid-imid) stammt, das durch Reaktion von 4,4'-Diisocyanatdiphenylmethan mit Trimellithsäureanhydrid hergestellt wird.

**13.** Gegenstand gemäß Anspruch 10 oder 11, dadurch gekennzeichnet, daß das Polyimid von Poly-N-(4,4'-diphenylmethan-trimellithamid-imid) stammt, das durch Reaktion von 4,4'-Diaminodiphenylmethan mit Benzoylchlorid-3,4-dicarbonsäureanhydrid hergestellt wird.

**14.** Gegenstand gemäß irgendeinem der Ansprüche 10 bis 13, dadurch gekennzeichnet, daß das nicht-haftfähige Polymer ein Fluorkohlenstoff- oder ein Silicon-Polymer ist.

**15.** Gegenstand gemäß irgendeinem der Ansprüche 10 bis 14, dadurch gekennzeichnet, daß er Küchengeschirr ist.

**16.** Zusammensetzung zur Duchführung des in Anspruch 1 definierten Verfahrens, welche (1) ein Polyimid-Harz und (2) ein Pigment umfaßt, wobei kein Organosilan in der Zusammensetzung vorliegt.

**17.** Zusammensetzung gemäß Anspruch 16, dadurch gekennzeichnet, daß das Polyimid-Harz Poly-N-(4,4'-diphenylmethan-trimellithamid-imid) ist, das durch Reaktion von 4,4'-Diisocyanatdiphenylmethan mit Trimellithsäureanhydrid hergestellt wird.

**18.** Zusammensetzung gemäß Anspruch 16 oder 17, dadurch gekennzeichnet, daß das Polyimid-Harz Poly-N-(4,4'-diphenylmethan-trimellithamid-imid) ist, das durch Reaktion von 4,4'-Diaminodiphenylmethan mit Benzoylchlorid-3,4-dicarbonsäureanhydrid hergestellt wird.

**Revendications**
**Revendications pour les Etats contractants suivants : ES, FR, IT**

**1.** Procédé de production d'un article coloré constitué d'un substrat de verre ou vitrocéramique transparent et d'au moins une couche d'un polymère antiadhérent couvrant au moins partiellement ledit substrat, caractérisé par (A) le décapage par projection d'abrasif de la partie à revêtir de la surface du substrat; (B) l'application sur cette partie d'une couche d'une résine polyimide pigmentée; (C) le séchage et le chauffage de ladite résine polyimide pigmentée à une température suffisamment élevée pour transformer ladite résine pigmentée en un film solide pigmenté; puis (D) l'application de ladite couche antiadhérente.

**2.** Procédé selon la revendication 1, caractérisé en ce que la résine polyimide pigmentée appliquée dans l'étape (B) contient, de plus, un organosilane ayant deux types de groupes fonctionnels, l'un d'eux réagissant, après hydrolyse, avec les groupes -OH de la surface du substrat, l'autre étant réactif avec la résine polyimide.

**3.** Procédé selon la revendication 1 ou 2, caractérisé par le fait que la résine polyimide est un poly-N-(4,4'-diphénylméthane-trimellamide-imide) préparé par réaction de 4,4'-diisocyanatodiphénylméthane avec l'anhydride trimellique.

**4.** Procédé selon la revendication 1 ou 2, caractérisé par le fait que la résine polyimide est un poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.

14

**5.** Procédé selon la revendication 2, caractérisé par le fait que l'organosilane est un amino- ou polyamino-alcoxysilane.

**6.** Procédé selon la revendication 5, caractérisé par le fait que l'amino-alcoxysilane est le gamma-aminopropyltriéthoxysilane.

**7.** Procédé selon la revendication 6, caractérisé par le fait que la proportion d'organosilane est comprise entre 1 et 10 pour cent en poids du mélange appliqué dans l'étape (B).

**8.** Procédé selon la revendication 7, caractérisé par le fait que la proportion d'organosilane est comprise entre 1 et 5 pour cent en poids du mélange appliqué dans l'étape (B).

**9.** Procédé selon l'une quelconque des revendications 1 à 8, caractérisé par le fait que ladite couche antiadhérente est constituée d'un polymère fluorocarboné ou d'un polymère de silicone.

**10.** Article constitué d'un substrat de verre ou vitrocéramique transparent et d'au moins une couche d'un polymère antiadhérent couvrant au moins partiellement ledit substrat, caractérisé par le fait qu'il contient également, appliquée entre ledit substrat et ledit polymère antiadhérent, une couche de polyimide pigmenté, ladite couche étant appliquée sur une surface décapée par projection d'abrasif dudit substrat.

**11.** Article selon la revendication 10, caractérisé en ce que ladite couche de polyimide pigmenté comprend, de plus, un organosilane lié chimiquement aux groupes -OH de la surface du substrat et à ladite couche de polyimide.

**12.** Article selon la revendication 10 ou 11, caractérisé en ce que ledit polyimide est dérivé de poly-N-(4,4'-diphénylméthane-trimellamide-imide) préparé par réaction de 4,4'-diisocyanatodiphénylméthane avec l'anhydride trimellique.

**13.** Article selon la revendication 10 ou 11, caractérisé en ce que ledit polyimide est dérivé de poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.

**14.** Article selon l'une quelconque des revendications 10 à 13, caractérisé en ce que ledit polymère antiadhérent est un polymère fluorocarboné ou un polymère de silicone.

**15.** Article selon l'une quelconque des revendications 10 à 14, caractérisé en ce qu'il s'agit d'un ustensile de cuisine.

**16.** Composition pour l'exécution du procédé défini dans la revendication 1, qui comprend (1) une résine polyimide et (2) un pigment.

**17.** Composition pour l'exécution du procédé défini dans la revendication 2, qui comprend (1) une résine polyimide, (2) un pigment et (3) un organosilane ayant deux types de groupes fonctionnels, l'un d'eux étant réactif,7. après hydrolyse, avec les groupes -OH de la surface du substrat et l'autre étant réactif avec ledit polyimide.

**18.** Composition selon la revendication 16 ou 17, caractérisée en ce que ladite résine polyimide est un poly-N-(4,4'-diphénylméthane-trimellamide-imide) préparé par réaction de 4,4'-diisocyanatodiphénylméthane avec l'anhydride trimellique.

**19.** Composition selon la revendication 16 ou 17, caractérisée en ce que ladite résine polyimide est un poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.

**20.** Composition selon la revendication 7, caractérisée en ce que ledit organosilane est un amino- ou polyamino-alcoxysilane.

21. Composition selon la revendication 20, caractérisée en ce que ledit aminoalcoxysilane est le gamma-aminopropyltriéthoxysilane.

22. Composition selon la revendication 21, caractérisée en ce que la proportion d'organosilane dans la résine polyimide pigmentée est comprise entre 1 et 10 % en poids.

**Revendications pour les Etats contractants suivants : DE, GB**

1. Procédé de production d'un article coloré constitué d'un substrat de verre ou vitrocéramique transparent et d'au moins une couche d'un polymère antiadhérent couvrant au moins partiellement ledit substrat, caractérisé par (A) le décapage par projection d'abrasif de la partie à revêtir de la surface du substrat; (B) l'application sur cette partie d'une couche d'une résine polyimide pigmentée; (C) le séchage et le chauffage de ladite résine polyimide pigmentée à une température suffisamment élevée pour transformer ladite résine pigmentée en un film solide pigmenté; puis (D) l'application de ladite couche antiadhérente.

2. Procédé selon la revendication 1, caractérisé en ce que la résine polyimide pigmentée appliquée dans l'étape (B) contient, de plus, un organosilane ayant deux types de groupes fonctionnels, l'un d'eux réagissant, après hydrolyse, avec les groupes -OH de la surface du substrat, l'autre étant réactif avec la résine polyimide.

3. Procédé selon la revendication 1 ou 2, caractérisé par le fait que la résine polyimide est un poly-N-(4,4'-diphénylméthane-trimellamide-imide) préparé par réaction de 4,4'-diisocyanatodiphénylméthane avec l'anhydride trimellique.

4. Procédé selon la revendication 1 ou 2, caractérisé par le fait que la résine polyimide est un poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.

5. Procédé selon la revendication 2, caractérisé par le fait que l'organosilane est un amino- ou polyamino-alcoxysilane.

6. Procédé selon la revendication 5, caractérisé par le fait que l'amino-alcoxysilane est le gamma-aminopropyltriéthoxysilane.

7. Procédé selon la revendication 6, caractérisé par le fait que la proportion d'organosilane est comprise entre 1 et 10 pour cent en poids du mélange appliqué dans l'étape (B).

8. Procédé selon la revendication 7, caractérisé par le fait que la proportion d'organosilane est comprise entre 1 et 5 pour cent en poids du mélange appliqué dans l'étape (B).

9. Procédé selon l'une quelconque des revendications 1 à 8, caractérisé par le fait que ladite couche antiadhérente est constituée d'un polymère fluorocarboné ou d'un polymère de silicone.

10. Article constitué d'un substrat de verre ou vitrocéramique transparent et d'au moins une couche d'un polymère antiadhérent couvrant au moins partiellement ledit substrat, caractérisé par le fait qu'il contient également, appliquée entre ledit substrat et ledit polymère antiadhérent, une couche de polyimide pigmenté, ladite couche étant appliquée sur une surface décapée par projection d'abrasif dudit substrat.

11. Article selon la revendication 10, caractérisé en ce que ladite couche de polyimide pigmenté comprend, de plus, un organosilane lié chimiquement aux groupes -OH de la surface du substrat et à ladite couche de polyimide.

12. Article selon la revendication 10 ou 11, caractérisé en ce que ledit polyimide est dérivé de poly-N-(4,4'-diphénylméthane-trimellamide-imide) préparé par réaction de 4,4'-diisocyanatodiphénylméthane avec l'anhydride trimellique.

**13.** Article selon la revendication 10 ou 11, caractérisé en ce que ledit polyimide est dérivé de poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.

**14.** Article selon l'une quelconque des revendications 10 à 13, caractérisé en ce que ledit polymère antiadhérent est un polymère fluorocarboné ou un polymère de silicone.

**15.** Article selon l'une quelconque des revendications 10 à 14, caractérisé en ce qu'il s'agit d'un ustensile de cuisine.

**16.** Composition pour l'exécution du procédé défini dans la revendication 1, qui comprend (1) une résine polyimide et (2) un pigment, ladite composition ne contenant pas d'organosilane.

**17.** Composition selon la revendication 16, caractérisée en ce que ladite résine polyimide est un poly-N-(4,4'-diphénylméthane-trimellamide-imide) préparé par réaction de 4,4'-diisocyanatodiphénylméthane avec l'anhydride trimellique.

**18.** Composition selon la revendication 16 ou 17, caractérisée en ce que ladite résine polyimide est un poly-N-(4,4'-diphénylméthane-trimellamide-imide) préparé par réaction de 4,4'-diaminodiphénylméthane avec l'anhydride d'acide (chlorure de benzoyle)-3,4-dicarboxylique.